# EUROPÄISCHE PATENTANMELDUNG

(11) **EP 1 098 516 A1**
(43) Veröffentlichungstag der Anmeldung: **09.05.2001**
(21) Anmeldenummer: 00203727.3
(22) Anmeldetag: 23.10.2000
(51) Int. Cl.: H04N 5/253

(54) **Filmabtaster mit einer Einrichtung zur automatischen Scharfstellung**

(30) Priorität: 02.11.1999 DE 19952608
(71) Anmelder: Philips Corporate Intellectual Property GmbH, 52064 Aachen (DE); Koninklijke Philips Electronics N.V., 5621 BA Eindhoven (NL)
(72) Erfinder: Brösamle, Michael, 52064 Aachen (DE)
(74) Vertreter: Volmer, Georg, Dipl.-Ing.

(57) **Zusammenfassung**

Bei einem Filmabtaster mit einer Einrichtung zur automatischen, bei dem die Filmbilder zeilenweise mittels eines Objektivs auf mindestens einen Zeilensensor abgebildet werden, wird nach einem vorgegebenen Programm bei stehendem Film der Einstellbereich des Objektivs durchfahren. Die dabei entstehenden Videosignale werden bezüglich ihres Anteils an hohen Frequenzen ausgewertet. Das Objektiv wird auf das Maximum des Anteils an hohen Frequenzen eingestellt.

## Beschreibung

Die Erfindung betrifft einen Filmabtaster mit einer Einrichtung zur automatischen Scharfstellung, bei denen die Filmbilder zeilenweise mittels eines Objektivs auf mindestens einen Zeilensensor abgebildet werden.

Die manuelle Einstellung der Schärfe bei Filmabtastern hat unter anderem den Nachteil, dass die Wahrnehmung der Bildschärfe durch den Menschen durch den Bildinhalt irritiert wird. Außerdem besteht dabei eine relativ große Totzeit, die ein Überschreiten der natürlichen Reaktion und damit einen "Überdreh"-Effekt zur Folge hat. Das heißt, der Benutzer dreht am Einstellknopf weiter, weil das System nicht so schnell folgen kann, und überschreitet damit das zu erreichende Ziel. Insbesondere bei sehr kurzen Szenen von beispielsweise 20s bis 30s, wie sie häufig bei Werbespots vorkommen, ist es somit schwierig, den Fokuspunkt zu finden.

Es sind zwar schon verschiedene Verfahren zur automatischen Scharfstellung bekanntgeworden, beispielsweise durch EP 0 017 726 A1. Diese lösen jedoch nicht die eingangs erwähnten Probleme.

Aufgabe der vorliegenden Erfindung ist es, einen Filmabtaster mit einer Einrichtung zur Scharfeinstellung anzugeben, welcher die aufgeführten Nachteile nicht aufweist.

Diese Aufgabe wird erfindungsgemäß dadurch gelöst, dass nach einem vorgegebenen Programm bei stehendem Film der Einstellbereich des Objektivs durchfahren wird, dass die dabei entstehenden Videosignale bezüglich ihres Anteils an hohen Frequenzen ausgewertet werden und dass das Objektiv auf das Maximum des Anteils an hohen Frequenzen eingestellt wird.

Eine vorteilhafte Ausführungsform der Erfindung besteht darin, dass der Film im Zwischenraum zwischen zwei Bildern (Bildstrich) abgetastet wird. Hierbei wird das auch im Bildstrich vorhandene Korn des Films zur Scharfeinstellung benutzt.

Eine andere Ausführungsform der Erfindung besteht darin, dass der Film innerhalb eines Bildes abgetastet wird und dass bei der Auswertung der Videosignale der Bildinhalt unterdrückt wird, insbesondere durch Autokorrelation.

Eine Weiterbildung mit einer vorteilhaften Auswertung der Videosignale besteht darin, dass zur Messung des Anteils der hohen Frequenzen Differenzen zwischen den Amplituden der Videosignale benachbarter Bildelemente gebildet werden. Damit ist eine Messung des Anteils der hohen Frequenzen durch einfache Rechenschritte in einem digitalen Signalprozessor möglich. Alternativ kann jedoch auch vorgesehen sein, dass die Videosignale zur Messung des Anteils an hohen Frequenzen einer schnellen Fourier-Transformation (FFT) unterworfen werden.

Für den Fall, dass nach dem Durchfahren des gesamten Einstellbereichs des Objektivs und der anschließenden Auswertung der Videosignale die Farbeinstellung nicht genau genug sein sollte, kann gemäß einer Weiterbildung vorgesehen sein, dass nach Durchfahren des Einstellbereichs ein kleinerer Bereich des Objektivs durchfahren wird, der das zuvor ermittelte Maximum einschließt, und dass das Objektiv auf ein nach dem Durchfahren des kleineren Bereichs ermitteltes weiteres Maximum eingestellt wird. Je nach Voraussetzungen im einzelnen kann auch eine mehrmalige Iteration im Sinne dieser Weiterbildung vorgesehen sein.

Eine andere Weiterbildung besteht darin, dass zur Ermittlung des Maximums aus den beim Durchfahren des Einstellbereichs gewonnenen Abtastwerten jeweils eines Bildelementes je eine Kurve erzeugt wird, dass für jede Kurve ein Maximum abgeleitet wird und dass ein Mittelwert der Lage der Maxima gebildet wird, wobei Maxima nicht berücksichtigt werden, die außerhalb einer vorgegebenen Streuung liegen. Durch die Mittelwertbildung als solche werden statistische Einflüsse, insbesondere Rauschanteile des Signals, von der Auswertung ausgeschlossen. Durch die Nichtberücksichtigung der Maxima, die außerhalb einer vorgegebenen Streuung liegen, wird insbesondere verhindert, dass Kratzer auf der der Schicht gegenüberliegenden Seite des Trägers eine Verfälschung der Scharfeinstellung zur Folge haben.

Bei einer vorteilhaften Ausgestaltung dieser Weiterbildung ist vorgesehen, dass zur Ermittlung der Maxima die jeweilige Funktion differenziert und ein Nullpunkt festgestellt wird.

Eine weitere vorteilhafte Ausführungsform der Erfindung besteht darin, dass die Videosignale in einen Zeilenspeicher eingeschrieben und von diesem in einen digitalen Signalprozessor übertragen werden, der zur Ermittlung des Maximums programmiert ist. Damit ist einerseits sichergestellt, dass der digitale Signalprozessor bei Bedarf auf Signale, die durch aufeinanderfolgende Abtastungen der gleichen Bildelemente entstehen, zugreifen kann. Andererseits können Zeilenspeicher mitbenutzt werden, die bei Filmabtastern ohnehin vorhanden sind, beispielsweise zur Kompensation des sogenannten fixed pattern noise (FPN).

Der stehende Film kann durch eine längere, beispielsweise mehr als 5s dauernde Beleuchtung, Schaden nehmen. Ein durch eine Dauerbeleuchtung entstehender Schaden am Bildinhalt kann bereits durch die obengenannte Ausführungsform der Erfindung, bei welcher die Abtastung im Bildstrich erfolgt, weitgehend vermieden werden. Es hat sich jedoch als vorteilhaft herausgestellt, dass gemäß einer Weiterbildung nach dem vorgegebenen Programm ferner die Beleuchtung des Films derart gesteuert wird, dass der Film nicht beleuchtet wird, wenn es zur Abtastung nicht erforderlich ist. Bei dieser Weiterbildung kann beispielsweise eine Blende solange geöffnet sein, wie der Einstellbereich des Objektivs durchfahren wird.

Ausführungsbeispiele der Erfindung sind in der Zeichnung anhand mehrerer Figuren dargestellt und in der nachfolgenden Beschreibung näher erläutert.

Es zeigt:
- Fig. 1: ein Blockschaltbild einer erfindungsgemäßen Einrichtung an einem Filmabtaster und
- Fig. 2: schematisch zur Scharfstellung benutzte Videosignale.

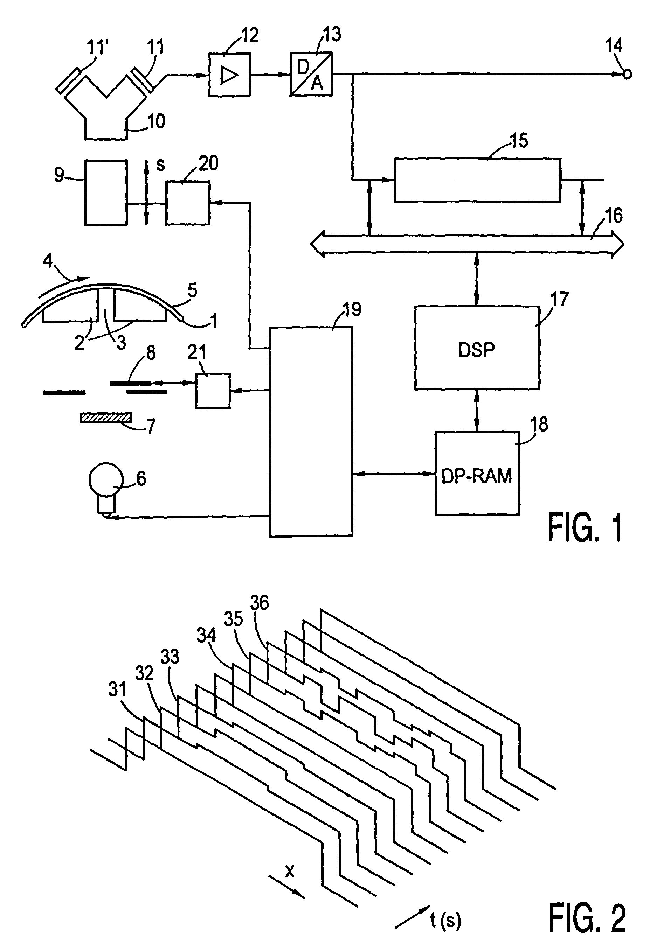

Fig. 1 enthält schematisch nur die zur Erläuterung der Erfindung erforderlichen Teile eines Filmabtasters. Dabei wird der bezüglich seiner Dicke vergrößert dargestellte Film 1 von Filmführungselementen 2, die auch ein Filmfenster 3 bilden, geführt. Zur laufenden Abtastung des Films 1 wird dieser beispielsweise in Richtung des Pfeils 4 bewegt. Dabei ist die Schicht 5 des Films auf der nicht mit den Filmführungselementen 2 in Berührung kommenden Seite des Films angeordnet.

Von einer Beleuchtungseinrichtung 6 wird der Film beleuchtet, wobei ein Filter 7 und eine Blende 8 vorgesehen sind. Die Blende 8 kann als Irisblende mit einer zusätzlichen Blende zur vollständigen Unterbrechung des Lichtstroms ausgebildet sein. Der Übersichtlichkeit halber ist in Fig. 1 lediglich eine den Lichtstrom unterbrechende Blende 8 schematisch dargestellt.

Jeweils eine beleuchtete Zeile wird mit Hilfe eines Objektivs 9 und eines Farbstrahlenteilers 10 auf zwei Zeilensensoren 11, 11' abgebildet. Dabei dient der Zeilensensor 11 zur Erzeugung eines Luminanzsignals, während der Zeilensenor 11' die Farbinformation aufnimmt, was bei dem dargestellten Ausführungsbeispiel nicht weiter erläutert ist. Die Erfindung kann jedoch auch bei Filmabtastern mit beispielsweise drei Sensoren für die jeweiligen Farbwertsignale R, G und B angewendet werden. Das Ausgangssignal des Zeilensensors 11 wird über einen Vorverstärker 12 einem Analog/Digital-Wandler 13 zugeführt und kann im Ausgang 14 zur weiteren Bearbeitung, beispielsweise Zwischenspeicherung, Gradationsentzerrung und Farbkorrektur, entnommen werden.

Vom Ausgang des Analog/Digital-Wandlers 13 wird das digitale Videosignal ferner einem Zeilenspeicher 15 zugeleitet. Dessen Eingang und dessen Ausgang sind über ein Bussystem 16 mit einem digitalen Signalprozessor 17 verbunden. Dieser steht über ein DUAL-PORT-RAM 18 mit einem Prozessor 19 in Verbindung, der zur Steuerung des gesamten Filmabtasters dient. Bei praktisch ausgeführten Filmabtastern wird eine solche Aufgabe in der Regel auf mehrere Prozessoren aufgeteilt, was zur Erläuterung der Erfindung jedoch unwesentlich ist. Neben anderen Funktionen steuert der Prozessor 19 über eine Antriebseinrichtung 20 die Scharfeinstellung des Objektivs 9. Ferner kann vom Prozessor 19 die Beleuchtungseinrichtung 6 und über eine Antriebseinrichtung 21 die Blende 8 gesteuert werden.

Zum Scharfstellen wird bei dem dargestellten Ausführungsbeispiel der eingelegte Film 1 durch nicht dargestellte auch von Hand steuerbare Filmantriebseinrichtungen (Kapstan, Wickler) derart ausgerichtet, dass im Filmfenster 3 ein Bildstrich zu stehen kommt. Nach Eingabe eines Startbefehls wird nach einem vorgegebenen Programm vom Prozessor 19 der Einstellbereich des Objektivs durchfahren und während dieser Zeit die Blende 8 offen gehalten. Die dabei entstehenden Videosignale werden in einen Zeilenspeicher 15, der als FIFO-Speicher ausgebildet ist, laufend eingeschrieben, so dass der Signalprozessor 17 über das Bussystem 16 jeweils zwei zeitlich aufeinanderfolgende Werte des gleichen Bildelements erfassen und deren Differenz bilden kann. Die Differenzen werden für alle Bildelemente und für alle während der Objektivbewegung auftretenden Momentanwerte im digitalen Signalprozessor 17 zwischengespeichert. Die Momentanwerte entsprechen wegen der gesteuerten Bewegung des Objektivs 9 den Werten für die korrespondierende Stellung s des Objektivs 9.

Im digitalen Signalprozessor 17 werden nach erfolgtem Durchlauf des Einstellbereichs des Objektivs für jedes Bildelement durch Verbinden der einzelnen Abtastwerte Kurven, beispielsweise Splines, ausgerechnet und deren Maxima durch Differenzieren und Nullsetzen ermittelt. Die Maximalwerte werden dann gemittelt, wobei außerhalb einer Streuung liegende Werte nicht berücksichtigt werden. Das Ergebnis wird dann über das DUAL-PORT-RAM 18 dem Prozessor 19 zugeführt, der einen neuen, kleineren Einstellbereich festlegt, die Blende 8 wieder öffnet und das Objektiv durch den neuen Einstellbereich fährt. Dabei wird die beschriebene Auswertung wiederholt und das Ergebnis wiederum über das DUAL-PORT-RAM 18 dem Prozessor 19 zugeführt, der dann das Objektiv 9 entsprechend dem Ergebnis einstellt.

Fig. 2 zeigt schematisch einige Zeilen des Videosignals während des Durchfahrens des Einstellbereichs des Objektivs 9 (Fig. 1). Dabei ist mit x die Zeilenrichtung gekennzeichnet, während senkrecht dazu die Zeit t bzw. der zurückgelegte Weg s des Objektivs 9 dargestellt ist. Bei der Bewegung in Pfeilrichtung verschiebt sich der Schärfepunkt von unten nach oben, bezogen auf die Darstellung nach Fig. 1. Während in der ersten dargestellten Zeile keinerlei Information erkennbar ist, beginnt in Zeile 31 ein auf der Unterseite des Films befindlicher Kratzer abgebildet zu werden.

Bei Zeile 32 ist die Abbildung des Kratzers scharf, weist also über einige Bildelemente eine relativ große Amplitude auf, so dass auch die Differenzen zu den benachbarten Bildpunkten groß werden. Diese nehmen in Zeile 33 wieder ab, worauf nach einigen Zeilen das in der Schicht 5 (Fig. 1) befindliche Korn zunächst kleinere (Zeile 34) dann größere (Zeile 35) und dann wieder kleinere (Zeile 36) Amplitudenunterschiede zur Folge hat. Wegen der stark vereinfachten Darstellung in Fig. 2 ist von den durch die Schicht 5 bedingten Signalen nur in Zeile 35 das Maximum erkennbar. Bei der oben beschriebenen Mittelung ergibt sich dann auch die Zeile 35 als Ort der größten Schärfe, wobei die Zeile 32 nicht in die Bewertung einbezogen wird.

## Patentansprüche

1. Filmabtaster mit einer Einrichtung zur automatischen Scharfstellung, bei denen die Filmbilder zeilenweise mittels eines Objektivs auf mindestens einen Zeilensensor abgebildet werden,
dadurch gekennzeichnet,
dass nach einem vorgegebenen Programm bei stehendem Film (1) der Einstellbereich des Objektivs (9) durchfahren wird, dass die dabei entstehenden Videosignale bezüglich ihres Anteils an hohen Frequenzen ausgewertet werden und dass das Objektiv (9) auf das Maximum des Anteils an hohen Frequenzen eingestellt wird.

2. Filmabtaster nach Anspruch 1,
dadurch gekennzeichnet,
dass der Film (1) im Zwischenraum zwischen zwei Bildern (Bildstrich) abgetastet wird.

3. Filmabtaster nach Anspruch 1,
dadurch gekennzeichnet,
dass der Film (1) innerhalb eines Bildes abgetastet wird und dass bei der Auswertung der Videosignale der Bildinhalt unterdrückt wird, insbesondere durch Autokorrelation.

4. Filmabtaster nach einem der vorhergehenden Ansprüche,
dadurch gekennzeichnet,
dass zur Messung des Anteils der hohen Frequenzen Differenzen zwischen den Amplituden der Videosignale benachbarter Bildelemente gebildet werden.

5. Filmabtaster nach einem der Ansprüche 1 bis 3,
dadurch gekennzeichnet,
dass die Videosignale zur Messung des Anteils an hohen Frequenzen einer schnellen Fourier-Transformation (FFT) unterworfen werden.

6. Filmabtaster nach einem der vorhergehenden Ansprüche,
dadurch gekennzeichnet,
dass nach Durchfahren des Einstellbereichs ein kleinerer Bereich des Objektivs (9) durchfahren wird, der das zuvor ermittelte Maximum einschließt, und dass das Objektiv (9) auf ein nach dem Durchfahren des kleineren Bereichs ermitteltes weiteres Maximum eingestellt wird.

7. Filmabtaster nach einem der vorhergehenden Ansprüche,
dadurch gekennzeichnet,
dass zur Ermittlung des Maximums aus den beim Durchfahren des Einstellbereichs gewonnenen Abtastwerten jeweils eines Bildelementes je eine Kurve erzeugt wird, dass für jede Kurve ein Maximum abgeleitet wird und dass ein Mittelwert der Lage der Maxima gebildet wird, wobei Maxima nicht berücksichtigt werden, die außerhalb einer vorgegebenen Streuung liegen.

8. Filmabtaster nach Anspruch 7,
dadurch gekennzeichnet,
dass zur Ermittlung der Maxima die jeweilige Funktion differenziert und ein Nullpunkt festgestellt wird.

9. Filmabtaster nach einem der vorhergehenden Ansprüche,
dadurch gekennzeichnet,
dass die Videosignale in einen Zeilenspeicher (15) eingeschrieben und von diesem in einen digitalen Signalprozessor (17) übertragen werden, der zur Ermittlung des Maximums programmiert ist.

10. Filmabtaster nach einem der vorhergehenden Ansprüche,
dadurch gekennzeichnet,
dass nach dem vorgegebenen Programm ferner die Beleuchtung des Films derart gesteuert wird, dass der Film (1) nicht beleuchtet wird, wenn es zur Abtastung nicht erforderlich ist.
